# EUROPÄISCHE PATENTANMELDUNG

(11) **EP 3 835 752 A1**
(43) Veröffentlichungstag der Anmeldung: **16.06.2021**
(21) Anmeldenummer: 19215622.2
(22) Anmeldetag: 12.12.2019
(51) Int. Cl.: G01N 15/02, B05B 12/08, F26B 3/12

(54) **VERFAHREN ZUR ÜBERWACHUNG DES MEDIENSTROMS EINES TRÖPFCHENSTRAHLS**

(71) Anmelder: AOM-Systems GmbH, 64646 Heppenheim (DE)
(72) Erfinder: Rosenkranz, Simon, 64625 Bensheim (DE); Schäfer, Walter, 69469 Weinheim (DE)
(74) Vertreter: Tergau & Walkenhorst Patentanwälte PartGmbB

(57) **Zusammenfassung**

Ein Verfahren zur Überwachung des Medienstroms eines Tröpfchenstrahls (4) soll auf besonders einfache und ressourcenschonende Weise eine zuverlässige Prozessführung gerade in industriellen Anwendungen ermöglichen. Dazu werden erfindungsgemäß durch zeitaufgelöste Messung der Intensität des Streulichts eines den Tröpfchenstrahl (4) kreuzenden Lichtstrahls (8) fortlaufend jeweils einzelnen Tröpfchen (2) zugeordnete Signal-Signaturen (12) erfasst, aus denen ein für den Tröpfchenstrahl (4) charakteristischer Diagnoseparameter ermittelt wird.

## Beschreibung

Die Erfindung betrifft ein Verfahren zur Überwachung des Medienstroms eines Tröpfchenstrahls sowie auf ein Verfahren zur Herstellung einer Beschichtung. Des Weiteren bezieht sich die Erfindung auf ein Verfahren zum Betreiben einer Lackier- oder Beschichtungsanlage oder einer Sprühtrocknungsanlage oder Sprühklebeanlage.

In einer Vielzahl industrieller Anwendungen kommen Zerstäubungs- oder Sprühvorgänge zum Einsatz, bei denen ein insbesondere als Flüssigkeit vorliegendes Medium zerstäubt und anschließend tröpfchen- oder teilchenweise, also als Spray, für einen nachfolgenden Verarbeitungsschritt bereitgestellt wird. Insbesondere werden solche Sprüh- oder Zerstäubungsvorgänge bei der Lackierung oder bei anderen Beschichtungsprozessen, insbesondere Spritzlackierung, von Bauteilen oder kompletten Baugruppen, beispielsweise in der Automobilindustrie, bei Beschichtungsprozessen zur Herstellung von Funktionsschichten, beispielsweise in der Pharmaindustrie, in Einspritzvorgängen, beispielsweise von Kraftstoffen, für Sprühklebevorgänge, bei der Sprühtrocknung oder in ähnlichen Prozessen eingesetzt. Die eigentliche Zerstäubung kann dabei beispielsweise durch Ein- oder Zweistoffdüsen, mittels Hochrotations- oder Ultraschallzerstäuber oder auch durch so genannte Swirling nozzles erfolgen.

Gerade bei industriellen Anwendungen ist üblicherweise eine genaue Überwachung des Medienstroms des durch die Zerstäubung entstehenden Sprüh- oder Tröpfchenstrahls erforderlich oder zumindest wünschenswert, gerade im Hinblick auf möglicherweise vorgegebene Zielwerte für Beschichtungen wie beispielsweise Schichtdicken oder dergleichen. Dabei sollten Änderungen oder Varianzen im Zerstäubungsprozess oder im damit erzeugten Spray möglichst im laufenden (Produktions-)Prozess in Echtzeit detektiert werden. Varianzen im Spray bezieht sich dabei unter anderem auf die Änderung der Qualität des Sprays oder Spray-Ergebnisses in Bezug auf die Beschichtungseigenschaften, welche sich im Allgemeinen aus der Tropfengröße, Tropfengeschwindigkeit und der Anzahl der Tropfen zusammensetzt.

Derartige Änderungen können in einem laufenden Produktionsprozess aufgrund unterschiedlicher Gründe entstehen, beispielsweise auftretender Verschmutzung, Abnutzung oder Defekt eines Zerstäubers oder einer Düse, Änderung des Sprüh- oder Beschichtungsmediums, beispielsweise bei Überschreitung der Tropfzeit, Änderung von Betriebsparametern wie beispielsweise Druckänderung, Positionsänderung, Änderung des Fahrwegs oder der Fahrgeschwindigkeit eines Roboters, Verschmutzung, Abnutzung oder Defekt in der Versorgung der Düse, beispielsweise durch Ablagerungen oder Verschmutzung in der Ringleitung oder der Zuluft, Änderung der Umgebungsparameter, beispielsweise durch veränderte Temperatur oder Luftfeuchte, Änderung der Zerstäubungsparameter, beispielsweise bei Änderung der elektrischen Felder beim elektrostatischen Lackieren, oder auch Bedienfehler beim Menschen.

Es besteht daher generell und gerade bei industriellen Beschichtungsvorgängen wie Funktionsbeschichtungen oder dekorative Beschichtung der Wunsch, insbesondere im Hinblick auf eine "inline"-Qualitätskontrolle für den Beschichtungsprozess vorzugsweise in Echtzeit eine kontinuierliche Überwachung des Medienstroms des Tröpfchenstrahls und der für die Tröpfchen charakteristischen Parameter wie Tröpfchengröße, Geschwindigkeit etc. zu ermöglichen. Hierzu können Systeme zum Einsatz kommen, mit denen die Bestimmung verschiedener charakteristischer Eigenschaften einzelner Teilchen oder Tröpfchen, insbesondere mit einer Größe im Bereich Millimeter und kleiner, möglich ist. Die gleichzeitige Bestimmung sowohl der Größe als auch der Geschwindigkeit einzelner Teilchen kann von besonderem Interesse sein, da mit diesen Informationen eine Flussdichte wie beispielsweise ein Massenfluss oder ein Volumenfluss ermittelt werden kann. Darüber hinaus können einzelne Teilchen in einer großen Anzahl von Teilchen identifiziert und individuell charakterisiert werden, wie beispielsweise einzelne Tröpfchen in einem Aerosol oder Spray.

Aus der Praxis sind hierfür verschiedene Messverfahren bekannt. In vielen Fällen sind optische Messverfahren vorteilhaft, da sie die einzelnen Teilchen nicht oder nicht nennenswert beeinflussen, deren Eigenschaften bestimmt werden sollen. Aus der DE 10 2014 211 514 A1 sind in diesem Zusammenhang ein Verfahren und ein System bekannt, mit dem unter Rückgriff auf das so genannte Zeitverschiebungsverfahren und die dafür eingesetzten Zeitverschiebungsmesseinrichtungen die Messung individueller Teilcheneigenschaften und damit auch von Durchsatz sowie von Volumen- und Massenstrom im Tröpfchenstrahl ermöglicht ist.

Der Erfindung liegt nunmehr die Aufgabe zugrunde, ein im Vergleich zum Stand der Technik noch weiter vereinfachtes Verfahren zur Überwachung des Medienstroms eines Tröpfchenstrahls anzugeben, mit dem auf besonders ressourcenschonende Weise eine zuverlässige Prozessführung gerade in industrieller Anwendung ermöglicht ist.

Diese Aufgabe wird erfindungsgemäß gelöst, indem durch zeitaufgelöste Messung der Intensität des Streulichts eines den Tröpfchenstrahl kreuzenden Lichtstrahls fortlaufend jeweils einzelnen Tröpfchen zugeordnete Signal-Signaturen erfasst werden, aus denen ein für den Tröpfchenstrahl charakteristischer Diagnoseparameter ermittelt wird.

Unter "Diagnoseparameter" ist hierbei insbesondere ein Parameter oder ein Kennwert zu verstehen, der als Eingangsgröße für eine nachgeschaltete Diagnose-, Steuer- oder Regeleinrichtung oder auch für Maschinen-Lern-Prozesse bereitgestellt und dort für eventuell vorgesehene diagnostische Zwecke bei der Überwachung des Tröpfchenstrahls oder auch für Steuer- oder Regeleingriffe bei der eigentlichen Prozessführung herangezogen werden kann. Insbesondere kann es sich bei einem solchen Diagnoseparameter um einen eher qualitativen Parameter wie beispielsweise "Prozessparameter in Ordnung", "Nachführung notwendig" oder dergleichen oder auch um einen quantitativ weiterverarbeitbaren Parameter wie beispielsweise eine Kennzahl handeln.

Die Erfindung geht von der Überlegung aus, dass zwar auch mit den bereits bekannten Systemen, insbesondere mit dem aus der DE 10 2014 211 514 A1 bekannten, auf dem Zeitverschiebungsverfahren beruhenden System, bereits eine zuverlässige Prozessüberwachung und -führung möglich ist. Allerdings werden bei solchen Systemen üblicherweise zunächst für die einzelnen, individuellen Tröpfchen charakteristische Parameter wie Tröpfchengröße oder dergleichen explizit ermittelt und sodann für eine Weiterverarbeitung bereitgestellt. Dies bedingt einen vergleichsweise hohen apparativen und rechentechnischen Aufwand. Eine bedeutende Vereinfachung ohne Beeinträchtigung der für die Prozessführung relevanten Zuverlässigkeit ist demgegenüber erreichbar, indem von der Ermittlung von für die individuellen Tröpfchen charakteristischen Parametern weitgehend abgesehen und stattdessen die für die jeweiligen Tröpfchen ermittelte Signal-Signatur bzw. die Signalstruktur unmittelbar für die Ermittlung des für den Tröpfchenstrahl - statt eines individuellen Tröpfchens - charakteristischen Diagnoseparameters herangezogen wird.

Bei der vorgesehenen zeitaufgelösten Messung des Streulichts des den Tröpfchenstrahl kreuzenden Lichtstrahls wird die Erkenntnis genutzt, dass ein den Lichtstrahl durchquerendes Teilchen üblicherweise verschiedene Streuanteile aussendet bzw. diese reflektiert. Diese Lichtanteile können von dem oder den zugeordneten Strahlungsdetektor(en) empfangen und über eine zeitaufgelöste Intensitätsverteilung dargestellt werden. Bei den unterschiedlichen Streuanteilen handelt es sich unter anderem um Reflektionen, Oberflächenwellen und Brechungen verschiedenster Ordnung und deren Moden, die zeitversetzt den jeweiligen Strahlungsdetektor erreichen. Daher erzeugt ein den Lichtstrahl durchquerendes Tröpfchen bei zeitaufgelöster Messung eine charakteristische Signatur, die über eine Anzahl von zugeordneten Parametern quantitativ erfasst und ausgewertet werden kann. Als für die Ermittlung des Diagnoseparameters besonders geeignet und damit besonders bevorzugt wird dabei die jeweilige Signal-Signatur anhand des oder der Auswerteparameter oder auch der Auswerteparameter-Vektoren maximale Amplitude, Gesamtenergie (entsprechend dem Zeitintegral über den Amplitudenverlauf), Auftrittshäufigkeit der Signal-Signaturen pro Zeiteinheit, Fourier-Transformierte der Signalstruktur und/oder Wavelet-Transformierte der Signalstruktur bewertet.

Auf die genannte Weise können quantitative Auswerteparameter ermittelt werden, wobei der Diagnoseparameter beispielsweise durch Vergleich des aktuell ermittelten Auswerteparameters mit einem zugeordneten Toleranzband ermittelt werden könnte. In einem solchen Fall könnte beispielsweise für den Fall, dass die maximale Amplitude der Signal-Signatur innerhalb eines vorgegebenen Toleranzbandes liegt, als Diagnoseparameter ein "System ok" - Information erzeugt und an die Prozessteuerung ausgegeben werden, so dass kein weiterer Regelungseingriff erfolgt. Andernfalls, also falls die maximale Amplitude außerhalb des vorgesehenen Toleranzbandes liegt, könnte als Diagnoseparameter eine Information ausgegeben werden, die eine Nachkorrektur am Zerstäuber auslöst.

Alternativ könnte auch der ermittelte Auswerteparameter, also beispielsweise die maximale Amplitude der Signal-Signatur, quantitativ unmittelbar als Diagnoseparameter an die Prozessregelung ausgegeben und dort als Führungsgröße verwendet werden, wobei der Zerstäubungsprozess so lange nachkorrigiert wird, bis die maximale Amplitude wieder im zugeordneten Toleranzband liegt.

In ganz besonders vorteilhafter Ausgestaltung wird der Diagnoseparameter aber anhand von Abweichungen von zeitlich versetzt erfassten Signal-Signaturen zueinander ermittelt. Dieser besonders bevorzugten Ausführungsform liegt die Überlegung zugrunde, dass als ein Auslegungsziel ein besonders stabile Prozessführung angestrebt wird, bei der sich die wesentlichen Parameter im stabilen Betrieb möglichst nicht ändern sollten. In dieser bevorzugten Ausführungsform, die auf besonders einfache und ressourcenschonende Weise umsetzbar ist, wird also als Diagnoseparameter dann ein Alarm- oder Hinweissignal ausgegeben, wenn sich die Signal-Signaturen mit der Zeit in unerwünschter Weise ändern.

Eine besonders hohe betriebliche und prozessuale Sicherheit bei der Prozessführung ist erreichbar, indem in besonders vorteilhafter Weiterbildung die Signal-Signaturen anhand des Vergleichs mit einem hinterlegten Soll-Profil validiert werden, wobei ausschließlich die als valide erkannten Signal-Signaturen bei der Ermittlung der Diagnoseparameters berücksichtigt werden. Dabei wird insbesondere überprüft, ob die erfassten Signal-Signaturen zumindest qualitativ mit einem zugeordneten Profil übereinstimmen. Falls dies der Fall ist, kann darauf geschlossen werden, dass es sich um ein "reales" erfasstes Tröpfchen handelt, das bei der Auswertung zu berücksichtigen ist; andernfalls wird auf ein Rausch-Ereignis geschlossen und das gemessene Signal verworfen.

Das Verfahren kann unter Verwendung lediglich eines Detektors durchgeführt werden. Vorteilhafterweise wird aber eine Mehrzahl von Detektoren zur Erfassung der Signal-Signaturen verwendet. Dies ermöglicht bei der Auswertung in der Art eines zusätzlichen Parameters, dass in besonders vorteilhafter Weiterbildung zur Ermittlung des Diagnoseparameters der Zeitversatz der Signal-Signaturen zwischen unterschiedlichen Detektoren bewertet wird.

In als eigenständig erfinderisch angesehener Ausgestaltung wird das Verfahren zum Betreiben einer Lackieranlage eingesetzt, wobei der Durchsatz der versprühten Lacktröpfchen mit einem Verfahren nach der vorstehend beschriebenen Art überwacht und der dabei ermittelte Diagnoseparameter als Eingangsgröße für die Steuerung der Lackieranlage verwendet wird.

In alternativer, ebenfalls als eigenständig erfinderisch angesehener Ausgestaltung wird das Verfahren zum Betreiben einer Sprühtrocknungsanlage eingesetzt, wobei der Durchsatz der Speiseteilchen mit einem Verfahren nach der vorstehend beschriebenen Art überwacht und der dabei ermittelte Diagnoseparameter als Eingangsgröße für die Steuerung der Sprühtrocknungsanlage verwendet wird.

Die mit der Erfindung erzielten Vorteile bestehen insbesondere darin, dass durch die Auswertung der Signal-Signatur an sich, insbesondere ohne eine zwischengeschaltete Ermittlung der individuellen Tröpfcheneigenschaften, auf besonders einfache und ressourcenschonende Weise eine zuverlässige Prozessüberwachung möglich ist. Gerade durch die Messung der Sprayvarianz, also die Ermittlung von Abweichungen der Signaturparameter relativ zueinander, kann der Verbrauch an Zeit, Material, CO₂ und dergleichen ebenso wie der Produktionsausschuss oder die Anzahl von Teilen, die nachbearbeitet werden müssen, besonders gering gehalten werden. Ebenso können nachgeschaltete (oder auch alternative) Qualitätssicherungsverfahren ganz oder teilweise eingespart werden.

Ein Ausführungsbeispiel einer Erfindung wird anhand einer Zeichnung näher erläutert. Darin zeigen:
- FIG. 1: ein Überwachungssystem für einen Tröpfchenstrahl,
- FIG. 2: eine Signal-Signatur,
- FIG. 3: ein Intensitätsspektrum eines Rauschereignisses (FIG. 3a) im Vergleich mit dem Intensitätsspektrum einer Signal-Signatur eines Tröpfchens (FIG. 3b), und
- FIG. 4: beispielhaft ein Diagramm für die zeitliche Entwicklung eines überwachten Parameters, einerseits in einem stabilen Normalfall (FIG. 4a) und andererseits bei einer auftretenden Störung (FIG. 4b).

Gleiche Teile sind in allen Figuren mit denselben Bezugszeichen versehen.

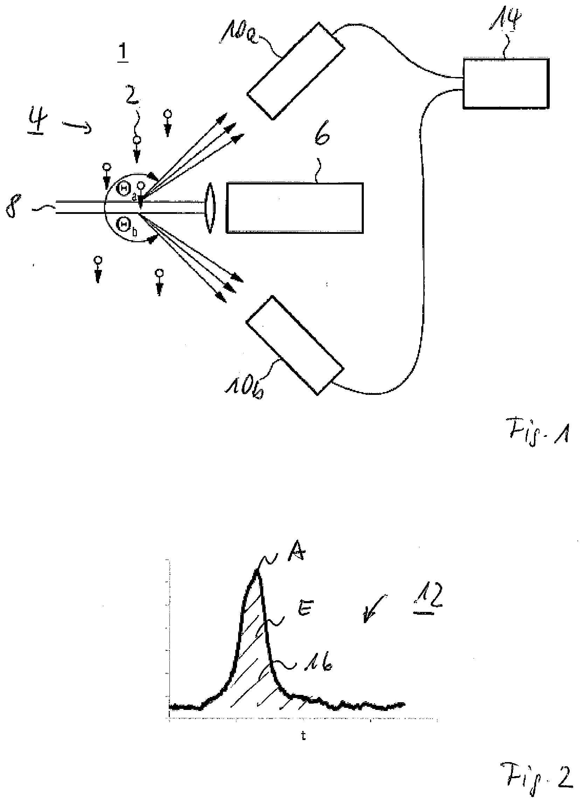

Das Überwachungssystem 1 nach FIG. 1 ist zur Überwachung eines von einer Vielzahl von Teilchen oder Tröpfchen 2 gebildeten Tröpfchenstrahls 4, beispielsweise der versprühten Lacktröpfchen einer Lackieranlage oder der Speiseteilchen einer Sprühtrocknungsanlage oder die Klebeteilchen einer Sprühklebeanlage oder die Tropfen einer Einspritzanlage, vorgesehen und ausgelegt. Dazu umfasst das Überwachungssystem eine Lichtquelle 6, die einen fokussierten Lichtstrahl 8 aussendet. Des Weiteren sind im Ausführungsbeispiel zwei Strahlungsdetektoren 10a, 10b vorgesehen, die im Winkel Θ_{a,b} von etwa Θ_{a,b} = 150° - 170° zum Lichtstrahl 8 angeordnet sind. Die Strahlungsdetektoren 10a, 10b messen dabei Streuanteile des Lichtstrahls 8, die von einem den Lichtstrahl 8 durchquerenden Teilchen, beispielsweise einem Tröpfchen 2 oder einem Partikel, reflektiert oder ausgesandt werden. Diese Streuanteile können dabei unter anderem Reflektionen, Oberflächenwellen und Brechungen verschiedenster Ordnung und deren Moden sein. Dabei treffen die verschiedenen Streuanteile zeitverzögert am ersten Strahlungsdetektor 10a ein und auch zusätzlich zeitverzögert beim zweiten Strahlungsdetektor 10b. Im dargestellten Ausführungsbeispiel sind somit zwei Strahlungsdetektoren 10a, 10b vorgesehen, so dass das dargestellte Überwachungssystem 1 hinsichtlich seiner Komponenten und seinem Aufbau Teil eines herkömmlichen Zeitverschiebungs-Messsystems sein könnte. Alternativ könnte aber auch lediglich ein Detektor oder auch eine größere Anzahl an Detektoren vorgesehen sein.

Im durch den Lichtstrahl 8 vorgegebenen Messvolumen streuen vorbeifliegende Tröpfchen 2 das Licht, so dass es mit den Strahlungsdetektoren 10a , 10b erfasst werden kann. Das Streulicht der einzelnen Tröpfchen 2 wird im jeweiligen Detektor 10a, 10b in ein Signal gewandelt. Aus dem zeitaufgelöst erfassten und über die Zeit jeweils gemessenen Signal resultiert ein jeweils an jedem Detektor 10a, 10b erfasster zeitaufgelöster Intensitätsverlauf, im Folgenden als Signal-Signatur 12 bezeichnet, wie sie beispielhaft in FIG. 2 gezeigt ist. Eine solche Signal-Signatur 12 ist üblicherweise, d. h. unter üblichen Volumen- und Massenströmen, jeweils einem einzelnen Tröpfchen 2 zugeordnet. D. h. im Überwachungssystem 1 werden durch zeitaufgelöste Messung der Intensität des Streulichts des den Tröpfchenstrahl 4 kreuzenden Lichtstrahls 8 fortlaufend jeweils einzelnen Tröpfchen 2 zugeordnete Signal-Signaturen 12 erfasst. Das grundsätzliche Profil einer solchen Signal-Signatur 12 ergibt sich dabei aus dem Messprozess, dem Umstand, dass die Tröpfchen 2 mit einer gewissen Geschwindigkeit durch den Lichtstrahl 8 hindurchtreten, sowie aus den diversen, oben bereits angeführten Streubeiträgen. Die von den Strahlungsdetektoren 10a, 10b erfassten zeitaufgelösten Intensitätsverläufe bzw. Signal-Signaturen 12 können anschließend durch eine zugeordnete Auswerteeinheit 14 des Überwachungssystems ausgewertet werden.

Die in FIG. 2 beispielhaft gezeigte Signal-Signatur 12 kann anhand einiger geeignet gewählter, auch für eine Verwendung als Auswerteparameter in der Auswerteeinheit 14 geeigneter Parameter quantitativ beschrieben und damit für eine Auswertung geeignet charakterisiert werden. Als charakteristische Parameter sind hierbei insbesondere die maximale Amplitude A des Signalverlaufs innerhalb der Signal-Signatur 12 und/oder die Gesamtenergie E des durch die jeweilige Signal-Signatur 12 repräsentierten Signals geeignet und vorgesehen. Die Gesamtenergie E entspricht dabei dem Zeitintegral über den Amplitudenverlauf der Signal-Signatur 12 und somit der in FIG. 2 schraffiert dargestellten durch den Amplitudenverlauf eingehüllten Fläche 16. Weitere für die Auswertung in der Auswerteeinheit nutzbarere Parameter sind zudem die Auftrittshäufigkeit der Signal-Signaturen 12 pro Zeiteinheit sowie, im Falle der auch im Ausführungsbeispiel dargestellten Verwendung von zwei oder mehr Strahlungsdetektoren 10a, 10b, der Zeitversatz zwischen zwei Signal-Signaturen 12 aus jeweils unterschiedlichen Detektoren 10a, 10b.

Das Überwachungssystem 1 und insbesondere dessen Auswerteeinheit 14 sind für eine besonders zuverlässige und vereinfachte Überwachung des Medienstroms des Tröpfchenstrahls 4 ausgelegt, mit dem auf besonders ressourcenschonende Weise eine zuverlässige Prozessführung des nachgelagerten Prozesses, beispielsweise in einer Lackieranlage oder in einer Sprühtrocknungsanlage, ermöglicht ist. Dazu ist die Auswerteeinheit 14 dafür ausgelegt, gezielt die Erfassung der den jeweils einzelnen Tröpfchen 2 zugeordneten Signal-Signaturen 12 für einen Quer- oder Relativvergleich der Signal-Signaturen 12 miteinander zu nutzen, um daraus einen im eigentlichen Anlagenprozess nutzbaren Diagnoseparameter zu bestimmen. Damit kann insbesondere überwacht werden, ob die ermittelten Signal-Signaturen 12 innerhalb eines vorgegebenen Toleranzbereichs über die Zeit gesehen im Wesentlichen konstant bleiben (hieraus kann beispielsweise geschlossen werden, dass der Anlagenprozess stabil läuft und somit kein Handlungs- oder Eingriffsbedarf besteht), oder ob eine zeitliche Veränderung der Signal-Signaturen 12 stattfindet (hieraus kann beispielsweise auf eine Störung oder einen Defekt im Prozess geschlossen werden, der einen Handlungs- oder Eingriffsbedarf bedingt). Es werden somit insbesondere die Abweichungen von zeitlich versetzt erfassten Signal-Signaturen 12 zueinander ausgewertet. Durch diese Auslegung, also insbesondere die Nutzung der erfassten Signal-Signaturen 12 in einem Quer- oder Relativvergleich, kann im Überwachungssystem 1 aus den Signal-Signaturen 12 unmittelbar, also ohne die in der Art eines Zwischenschritts notwendige explizite Berechnung eines für die Tröpfchen an sich charakteristischen Parameters wie beispielsweise die Tröpfchengröße, ein für den Tröpfchenstrahl 4 charakteristischer Diagnoseparameter ermittelt und für eine nachfolgende Weiterverarbeitung bereitgestellt werden.

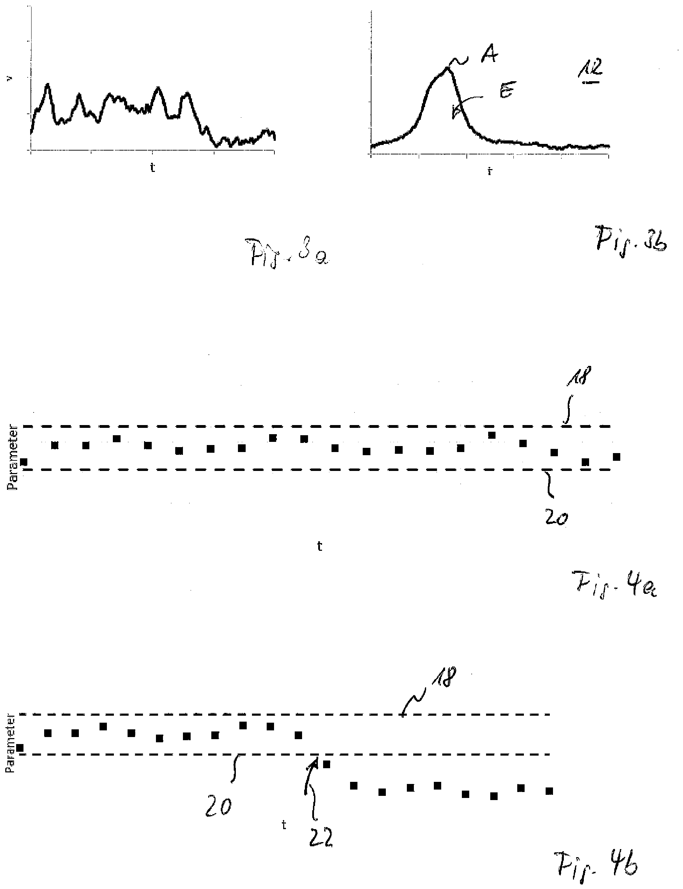

Um dabei eine besonders hohe Zuverlässigkeit des Überwachungssystems 1 zu gewährleisten, werden die erfassten Signal-Signaturen 12 in der Auswerteeinheit 14 vor ihrer weiteren Verarbeitung einer Plausibilisierung oder Plausibilitätsprüfung unterzogen. Dabei wird die Erkenntnis genutzt, dass die erfassten Signal-Signaturen 12 mess- und systembedingt ein charakteristisches Profil aufweisen. Dies kann genutzt werden, um ein tatsächlich für die Messung und Überwachung relevantes Messereignis oder nur ein bei der Auswertung nicht zu berücksichtigendes Rausch-Ereignis vorliegt. Zum Vergleich sind in FIG. 3a das Intensitätsspektrum (als Funktion der Zeit) eines Rauschereignisses und in FIG. 3b dasjenige eines durch ein Tröpfchen 2 ausgelösten Signals gezeigt. Zur Validierung oder Plausibilisierung eines solchen Signal-Spektrums 12 kann dabei beispielsweise überprüft werden, ob das Verhältnis aus maximaler Amplitude A und Gesamtenergie E in einem vorgegebenen Intervall liegt, oder es können auch andere, für die Signalform charakteristische Kriterien angewendet werden. Insbesondere kann ein Vergleich mit einem in der Auswerteeinheit 14 hinterlegten Soll-Profil vorgenommen werden.

Bei der eigentlichen Sprayüberwachung ermittelt sodann die Auswerteeinheit 14 anhand der als valide erkannten und plausibilisierten gemessenen Signal-Signaturen 12 einen Diagnoseparameter für den Spray-Prozess, der in einer zugeordneten Steuer- oder Regelungsanlage weiter verwendet werden kann. Dabei werden zunächst einer oder mehrere den Signal-Signaturen 12 entnehmbare, für den jeweiligen Anwendungsfall als geeignet ausgewählte Auswerteparameter festgelegt, der oder die sodann hinsichtlich seines zeitlichen Verlaufs, also insbesondere hinischtlich seiner Abweichungen von den vorangegangenen Ereignissen überwacht wird. Bei jedem detektierten Tröpfchen 2 werden die ausgewählten Paramater aus dem Streulichtsignal errechnet.

Insbesondere können unter Rückgriff auf gängige Messtechnik üblicherweise tausende solcher Ereignisse pro Sekunde in Echtzeit in einem Spray vermessen werden. Für die Darstellbarkeit und eine verbesserte Analyse werden in einer bevorzugten Ausgestaltung die so errechneten Parameter der Ereignisse in einem kurzen Zeitfenster (beispielsweise im Millisekundenbereich) zusammengefasst (z.B.: gemittelt) und ausgewertet. Eine Darstellung über der Zeit einer beispielhaften Messung ist in FIG. 4 gezeigt.

FIG. 4a zeigt dabei den Fall, dass der so ermittelte Parameter über die Zeit gesehen innerhalb eines durch eine untere Grenze 18 und eine obere Grenze 20 definierten Toleranzbandes bleibt. Demgegenüber zeigt FIG. 4b einen Fall, bei dem der überwachte Parameter in einem durch den Pfeil 22 bezeichnete Moment das Toleranzband durch Unterschreiten der unteren Grenze 18 verlässt. In der Auswerteeinheit 14 wird aus diesen Ergebnissen im ersten Fall (FIG. 4a) geschlossen, dass der überwachte Prozess stabil läuft, und beispielsweise als Diagnoseparameter ein Signal "System ok" erzeugt. Im zweiten Fall (FIG. 4b) hingegen wird auf eine Veränderung des Sprühprozesses und damit auf einsetzenden Handlungsbedarf geschlossen. In diesem Fall könnte als Diagnoseparameter beispielsweise ein Signal "Warnung" oder, bei quantitativer Korrelation mit dem überwachten Sprühprozess, auch ein quantitatives Feedback-Signal für die Anlagensteuerung erzeugt werden, mit dem das System wieder in das gewünschte Sprayverhalten zurückgeführt wird.

Dieses Vorgehen ist aber lediglich beispielhaft dargestellt; die Referenzwerte oder die untere Grenze 18 und die obere Grenze 20 müssen nicht konstant über der Zeit sein. Die Parameter müssen auch nicht mit einem Referenzwert verglichen werden - allein die Änderung der Parameter kann bereits Aufschluss auf eine Änderung im Spray und damit notwendig werdenden Handlungsbedarf geben.

Die bei der Auswertung der Signal-Signaturen 12 ermittelten Parameter werden insbesondere geeignet im Hinblick auf den zu überwachenden Anlagenprozess ausgewählt. Insbesondere folgende Parameter können unter folgenden Bedingungen für die Auswertung bevorzugt sein:
- Die maximale Amplitude A: wie sich gezeigt hat, korreliert diese proportional zu der Tröpfchengröße. Bei einem Zerstäubungs- oder Sprayprozess wird beispielsweise bei einer Erhöhung der Zerstäuberluft eine kleinere Tröpfchengröße erwartet, so sich auch dieser Wert verringern sollte. Dieser Wert ist also beispielsweise für eine Überwachung oder Regelung der Luftzufuhr zum Zerstäuber geeignet.
- Die Gesamtenergie E: Dieser Wert korreliert antiproportional zur Tropfengeschwindigkeit. Wenn beispielsweise Lenklüfte in einem Zerstäuber verringert werden, werden langsamere Tropfen erwartet. Damit sollte sich dieser Wert erhöhen.
- Die Auftrittshäufigkeit der Signal-Signaturen 12: Dieser Wert korreliert proportional zu der Anzahl der Tropfen bzw. zu dem Spraydurchsatz.
- Der Zeitversatz zwischen Signalen in unterschiedlichen Kanälen, d. h. an unterschiedlichen Detektoren 10a, 10b: dieser Parameter, üblicherweise als "Time Shift" bezeichnet, korreliert proportional zu der Tröpfchengröße und antiproportional mit der Tröpfchengeschwindigkeit.

Alle der genannten Parameter sind sensitiv auf die gerade in einer Lackieranlage, aber auch allgemein in einem Sprüh- oder Zerstäubungsprozess potentiell auftretenden Probleme wie Düsenverschleiß, Materialänderung (Inhomogenität), Instabilität der Betriebsparameter und dergleichen, und damit per se zur Prozessüberwachung geeignet.

### Bezugszeichenliste

- 1: Überwachungssystem
- 2: Tröpfchen
- 4: Tröpfchenstrahl
- 6: Lichtquelle
- 8: Lichtstrahl
- 10a, 10b: Strahlungsdetektor
- 12: Signal-Signatur
- 14: Auswerteeinheit
- 16: Fläche
- 18: untere Grenze
- 20: obere Grenze
- 22: Pfeil

- A: Amplitude
- E: Gesamtenergie

## Patentansprüche

1. Verfahren zur Überwachung des Medienstroms eines Tröpfchenstrahls (4), bei dem durch zeitaufgelöste Messung der Intensität des Streulichts eines den Tröpfchenstrahl (4) kreuzenden Lichtstrahls (8) fortlaufend jeweils einzelnen Tröpfchen (2) zugeordnete Signal-Signaturen (12) erfasst werden, aus denen ein für den Tröpfchenstrahl (4) charakteristischer Diagnoseparameter ermittelt wird.

2. Verfahren nach Anspruch 1, bei dem der Diagnoseparameter anhand von Abweichungen von zeitlich versetzt erfassten Signal-Signaturen (12) zueinander ermittelt wird.

3. Verfahren nach Anspruch 1 oder 2, bei dem die Signal-Signaturen (12) anhand des Vergleichs mit einem hinterlegten Soll-Profil validiert werden, wobei ausschließlich die als valide erkannten Signal-Signaturen (12) bei der Ermittlung der Diagnoseparameters berücksichtigt werden.

4. Verfahren nach einem der Ansprüche 1 bis 3, bei dem zur Ermittlung des Diagnoseparameters die jeweilige Signal-Signatur (12) anhand des oder der Auswerteparameter maximale Amplitude (A), Gesamtenergie (E, entsprechend dem Zeitintegral über den Amplitudenverlauf) und/oder Auftrittshäufigkeit der Signal-Signaturen (12) pro Zeiteinheit bewertet wird.

5. Verfahren nach einem der Ansprüche 1 bis 4, bei dem in einer Mehrzahl von Detektoren (104, 10b) Signal-Signaturen (12) erfasst werden.

6. Verfahren nach Anspruch 5, bei dem zur Ermittlung des Diagnoseparameters der Zeitversatz der Signal-Signaturen (12) zwischen unterschiedlichen Detektoren (10a, 10b) bewertet wird.

7. Verfahren zur Herstellung einer Beschichtung durch Zuführung eines Tröpfchenstrahls (4) zu einer zu beschichtenden Oberfläche, bei dem der Medienstrom des Tröpfchenstrahls mit einem Verfahren nach einem der Ansprüche 1 bis 6 überwacht wird.

8. Verfahren zum Betreiben einer Beschichtungsanlage, insbesondere einer Lackieranlage, wobei der Durchsatz der versprühten (Lack-)Tröpfchen mit einem Verfahren nach einem der Ansprüche 1 bis 6 überwacht und der dabei ermittelte Diagnoseparameter als Eingangsgröße für die Steuerung der Beschichtungsanlage verwendet wird.

9. Verfahren zum Betreiben einer Sprühtrocknungsanlage, wobei der Durchsatz der Speiseteilchen mit einem Verfahren nach einem der Ansprüche 1 bis 6 überwacht und der dabei ermittelte Diagnoseparameter als Eingangsgröße für die Steuerung der Sprühtrocknungsanlage verwendet wird.

10. Verfahren zum Betreiben einer Sprühklebeanlage, wobei der Durchsatz der Klebeteilchen mit einem Verfahren nach einem der Ansprüche 1 bis 6 überwacht und der dabei ermittelte Diagnoseparameter als Eingangsgröße für die Steuerung der Sprühklebeanlage verwendet wird.
